**Europäisches Patentamt**

**European Patent Office**

**Office européen des brevets**

(19)

(11) Veröffentlichungsnummer: **0 255 663 B1**

## (12) EUROPÄISCHE PATENTSCHRIFT

(45) Veröffentlichungstag der Patentschrift: **10.04.91**

(51) Int. Cl.5: **B60H 3/06**, B60H 1/00

(21) Anmeldenummer: **87110637.3**

(22) Anmeldetag: **22.07.87**

(54) Belüftungssystem für ein Kraftfahrzeug.

(30) Priorität: **04.08.86 DE 3626392**
**04.08.86 DE 3626393**
**04.08.86 DE 3626395**

(43) Veröffentlichungstag der Anmeldung:
**10.02.88 Patentblatt 88/06**

(45) Bekanntmachung des Hinweises auf die
Patenterteilung:
**10.04.91 Patentblatt 91/15**

(84) Benannte Vertragsstaaten:
**BE DE ES FR GB IT NL SE**

(56) Entgegenhaltungen:
**DE-A- 3 330 950**
**DE-A- 3 421 323**
**DE-C- 3 330 951**
**FR-A- 1 318 298**

**PATENT ABSTRACTS OF JAPAN, Band 6, Nr.
253 (M-178)[1131], 11. Dezember 1982; & JP-
A-57 147 918 (ISEKI NOKI K.K.) 13-09-1982**

**IDEM**

(73) Patentinhaber: **Siemens Aktiengesellschaft**
**Wittelsbacherplatz 2**
**W-8000 München 2(DE)**

(72) Erfinder: **Soethout, Freddie**
**Hunsrückstrasse 5**
**W-5000 Köln 60(DE)**
Erfinder: **Radtke, Wolfgang**
**Nachtigallenweg 46**
**W-5063 Steinenbrück(DE)**

**Beschreibung**

Die Erfindung bezieht sich auf ein Belüftungssystem für ein Kraftfahrzeug gemäß Oberbegriff des Anspruchs 1; ein derartiges Belüftungssystem ist aus der DE-C2-3 330 951 bekannt.

Bei dem vorgenannten bekannten Belüftungssystem ist einerseits im Außenluftkanal ein fest angeordnetes Filter zur Reinigung der Außenluft und andererseits vor dem Zuluft-Kanal zwischen dem Außenluft-Kanal und dem Umluft-Kanal eine schwenkbare Klappe angeordnet, mit der das Verhältnis von Außenluft zu Umluft einstellbar ist; eine Filterung der Umluft ist nicht möglich.

Ausgehend von einem Belüftungssystem der eingangs genannten Art liegt der Erfindung die Aufgabe zugrunde, bei kompakter Bauweise mit geringem Filter- und Einstellaufwand dem Innenraum des Kraftfahrzeuges in variablem Mischungsverhaltnis sowohl ungefilterte als auch gefilterte Außenluft bzw. Umluft zuführen zu können. Die Lösung dieser Aufgabe gelingt erfindungsgemäß jeweils durch die Lehre gemäß den nebengeordneten Hauptansprüchen 1; 3; 4; 5 bzw. 6.

Die Erfindung wird im folgendenden anhand mehrerer schematisch dargestellter Ausführungsbeispiele in der Zeichnung näher erläutert; darin zeigen:

FIG 1 bis 6 eine erste Ausführung eines Belüftungssystems mit jeweils unterschiedlichen Filterstellungen,

FIG 7 eine zweite Ausführung eines Belüftungssystems,

FIG 8 bis 12 eine dritte Ausführung eines Belüftungssystems mit jeweils unterschiedlichen Filterstellungen,

FIG 13 eine vierte Ausführung eines Belüftungssystems,

FIG I4 eine fünfte Ausführung eines Belüftungssystems.

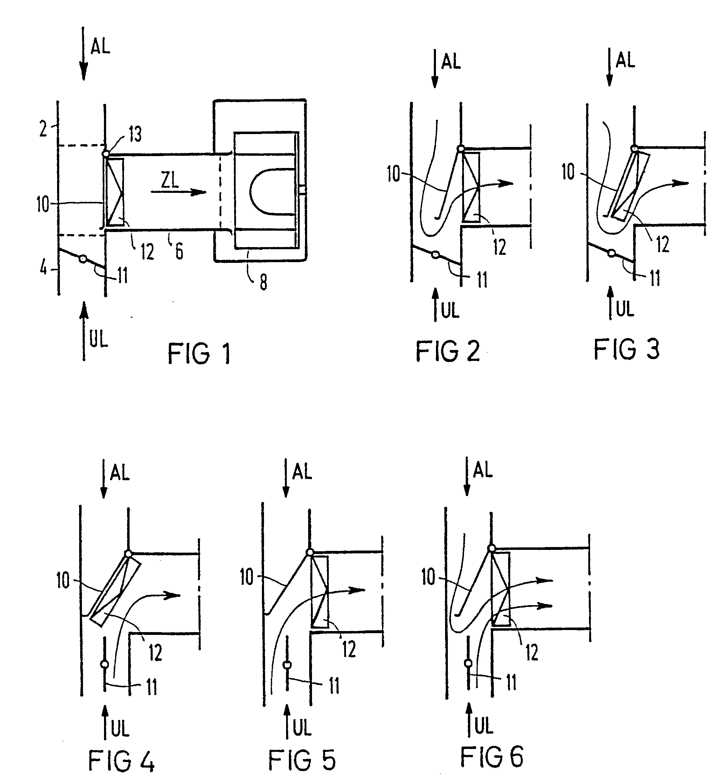

FIG 1 zeigt ein Belüftungssystem mit einem Zuluft-Kanal ZL mit an dessen Eingang mündendem Außenluft-Kanal AL und Umluft-Kanal UL und an dessen Ausgang angeschlossenem Gebläse 8, mit dem die durch den Zuluft-Kanal ZL geförderte Luft in unterschiedlichem Mischungsverhältnis von gefilterter bzw. ungefilterter Außenluft bzw. Umluft in den Innenraum eines hier nicht dargestellten Personenkraftwagens gefördert wird. Der Zuluft-Kanal ZL enthält einen Filterstutzen 6 mit einem eingangsseitigen ersten Ansaugstutzen 2 des Außenluft-Kanals AL und einem eingangsseitigen zweiten Ansaugstutzen 4 des Umluft-Kanals UL; das Filter ist als Scheibenfilter 12 zusammen mit einer ersten Verschlußklappe 10 am Eingang des Filterstutzens 6 bei zueinander unabhängiger Verstellmöglichkeit um eine Drehachse 13 schwenkbar angeordnet. Die Menge der durch den Umluft-Kanal UL und den Ansaugstutzen 4 zufließenden Umluft kann durch eine zusätzliche, getrennt steuerbare Verschlußklappe 11, insbesondere einer Drehklappe, im Ansaugstutzen 4 verändert werden.

Durch die erste Verschlußklappe 10 läßt sich der Zustrom von Außenluft entweder gemäß FIG 4, 5 vollständig oder gemäß FIG 2, 3 und 6 teilweise absperren. Unabhängig von der Stellung der ersten Verschlußklappe 10 läßt sich das Scheibenfilter 12 um die Drehachse 13 entweder gemäß FIG 2 und 5, 6 voll vor den Ansaugstutzen mit voller Filterung der jeweils zugeführten Außenluft bzw. Umluft oder in Wegschwenkstellungen gemäß FIG 3, FIG 5 bringen, so daß die Außenluft bzw. die Umluft ungefiltert in den Filterstutzen 6 eintreten kann, wobei dann die Eingangsseite des Scheibenfilters 12 durch die erste Verschlußklappe 10 abgedeckt ist. Ist eine solche Abdeckung des vom Filterstutzen 6 weggeschwenkten Scheibenfilters 12 nicht vorgesehen, so kann ein Teil der durch den ersten Ansaugstutzen 2 bzw. den zweiten Ansaugstutzen 4 zuströmenden Außenluft bzw. Umluft durch den Scheibenfilter 12 durchtreten und somit gefiltert werden.

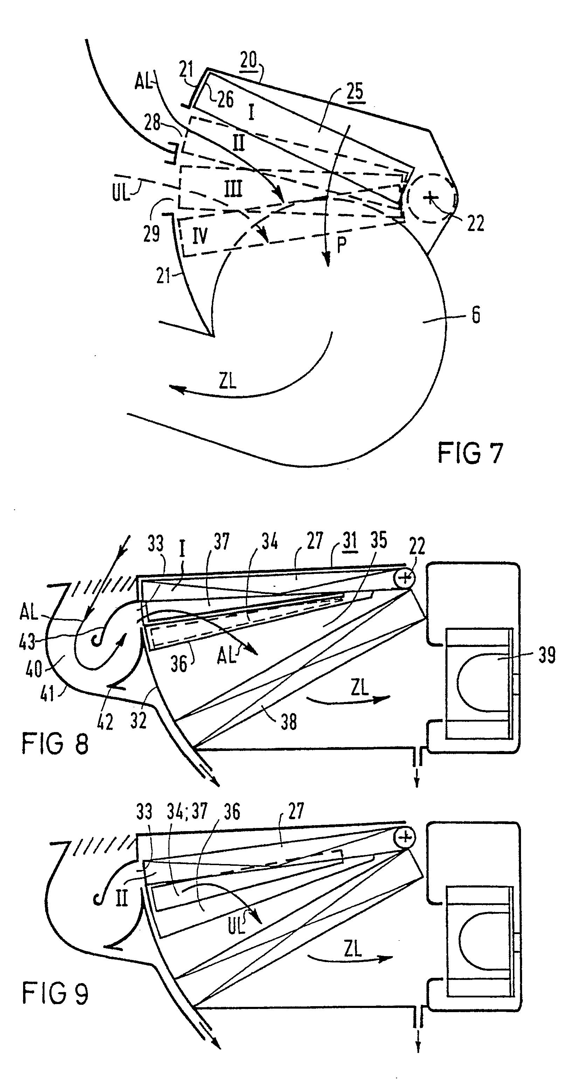

FIG 7 zeigt eine weitere Ausgestaltung eines erfindungsgemäßen Lüftungssystems, bei der der Zuluft-Kanal ZL einen HohlzylinderSektor 20 mit in seiner Mantelfläche 21 in Umfangsrichtung hintereinander angeordneter erster und zweiter Einlaßöffnung 28 bzw. 29 eines Außenluft-Kanals AL bzw. eines Umluf-Kanals UL enthält und bei dem das Filter als Scheibensektorfilter 25 innerhalb des Hohlzylinder-Sektors 20 derart ausgebildet und um dessen Zylinderachse 22 schwenkbar gelagert ist, daß es in einer ersten Endstellung I an der dem Ventilator 6 abgewandten Seite oberhalb der ersten und zweiten Einlaßöffnung 28 bzw. 29 derart verschwenkt ist, daß sowohl die Außenluft als auch die Umluft ungefiltert Zutritt zum Ventilator 6 und damit zum Zuluft-Kanal ZL haben. Die Form und die Abmessungen des Scheibensektorfilters 25 und des Innenraums des Hohlzylinder-Sektors 20 sind derart aufeinander abgestimmt, daß sich das Scheibensektorfilter 25 in dem Innenraum mit nur geringem Spiel bewegt.

Wird das in FIG 7 in der Stellung I mit ausgezogener Kontur dargestellte Scheibensektorfilter 25 in Richtung des Pfeiles P in die mit gestrichelter Kontur dargestellte Stellung II verschwenkt, wird zunächst der Anteil der Außenluft durch die mantelseitige Stirnseite des Scheibensektorfilters 25 vor der ersten Einlaßöffnung 28 stetig reduziert und schließlich ganz abgesperrt, derart daß in diesem Fall nur noch ungefilterte Umluft Zutritt zum Ventilator 6 und damit zum Innenraum des Fahrzeuges hat. Bei weiterer Verschwenkung des Scheibensektorfilters 25 in die Stellung III wird schließlich ein wachsender Anteil der Außenluft über das Scheibensektorfilter 25 geleitet; dabei nimmt der ungefilterte Anteil der Umluft ab. In der Stellung III ist die zweite Einlaßöffnung 29 durch die mantelseitige Stirnfläche 26 des Scheibensektorfilters 25 voll versperrt, so daß jetzt nur noch gefilterte Außenluft über den Ventilator 6 in den Zuluft-Kanal ZL und damit in den Innenraum des Kraftfahrzeuges gefördert wird. Bei der zweiten Endstellung IV liegt nunmehr das Scheibensektorfilter 25 unterhalb der geöffneten ersten und zweiten Einlaßöffnung 28 bzw. 29, so daß nunmehr Außenluft und Umluft in voller Menge, jedoch gefiltert, zum Zuluft-Kanal ZL gefördert werden.

Bei einem weiteren erfindungsgemäßen Ausführungsbeispiel gemäß FIG 8 bis 12 enthält der Zuluft-Kanal ZL einen HohlzylinderSektor 31 mit in seiner Mantelfläche 32 angeordneter erster Einlaßöffnung 33 und in zumindest einer Stirnfläche 35 angeordneter zweiter Einlaßöffnung 34 des Außenluft-Kanals AL bzw. des Umluft-Kanals UL. Das Filter ist wiederum als Scheibensektorfilter 27 mit guter Passung innerhalb des Hohlzylinder-Sektors 31 um dessen Zylinderachse 22 schwenkbar gelagert und steht in Verstellmitnahme mit einem Verschlußschieber 36 mit einer der zweiten Einlaßöffnung 34 zugeordneten Durchlaßöffnung 37. Je nach unterschiedlicher Schwenkstellung des Scheibensektorfilters 27 entsprechend FIG 8 bis 11 ist die erste Einlaßöffnung 33 durch die der Mantelfläche 32 des Hohzylinder-Sektors 31 zugewandte schmale Stirnfläche des Scheibensektorfilters 27 einerseits und die zweite Einlaßöffnung 34 durch den Verschlußschieber 36 bzw. desse Einlaßöffnung 34 mehr oder weniger weit verschließbar.

FIG 8 zeigt den Scheibensektorfilter 27 in einer ersten Endstellung 1 mit oberhalb der ersten Einlaßöffnung 33 angeordneter schmalen Stirnfläche des Scheibensektorfilters 27 und durch den Verschlußschieber 36 verdeckter zweiter Einlaßöffnung 34, so daß vom Außenluft-Kanal AL Außenluft in voller Volumenmenge, jedoch ungefiltert durch den Ventilator 39 über einen Kühler 38 in den Zuluft-Kanal ZL gefördert wird.

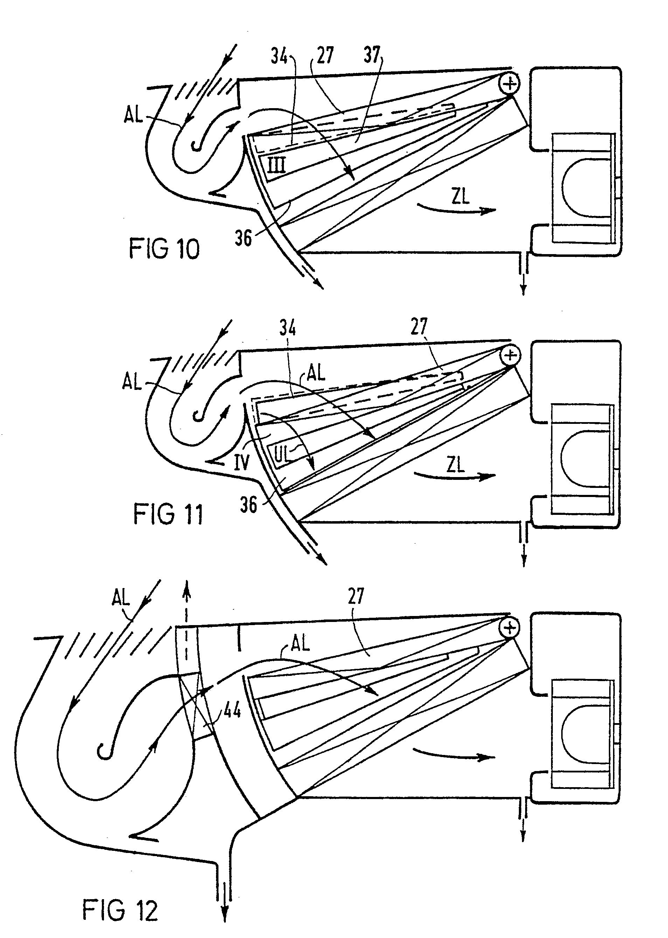

Gemäß FIG 9 ist in der Zwischen-Stellung II nunmehr die erste Einlaßöffnung 33 durch den Scheibensektorfilter 27 verschlossen und die zweite Einlaßöffnung 34 aufgrund der nunmehr durch Verschwenken des Verschlußschiebers 36 deckungsgleichen Durchlaßöffnung 37 frei gegeben; dadurch wird durch den Ventilator 39 Umluft in vollem Umfang, jedoch ungefiltert, in den Zuluftkanal ZL gefördert.

In der Zwischenstellung III gemäß FIG 10 ist die erste Einlaßöffnung 33 für den Außenluftkanal AL geöffnet und die zweite Einlaßöffnung für den Umluftkanal UL verschlossen, wobei aufgrund der weiteren Verschwenkung des Scheibensektorfilters 27 dieser nunmehr zwischen der ersten Einlaßöffnung 33 für den Außenluft-Kanal AL und dem Zuluft-Kanal ZL liegt, so daß die in den Zuluft-Kanal ZL geförderte Außenluft nunmehr voll gefiltert wird.

Bei der zweiten Endstellung IV gemäß FIG 11 sind sowohl die erste Einlaßöffnung 33 für die Außenluft als auch die zweite Einlaßöffnung 34 für die Umluft voll freigegeben; beide Luftströme werden vor ihrem Eintritt in den Zuluft-Kanal ZL durch den Scheibensektorfilter 27 gefördert und treten somit als voll gefilterter Luftstrom in den Innenraum des Kraftfahrzeuges ein.

FIG 12 zeigt in vorteilhafter Ergänzung zu den Filtersystemen gemäß FIG 8 bis 11 einen zusätzlichen auswechselbaren Vorfilter 44 im Außenluft-Kanal AL. Wie insbesondere anhand FIG 8 ersichtlich, wird außerdem der Außenluft-Kanal AL eingangsseitig von einer etwa kreisförmig verlaufenden Außenwand 41 und einer Innenwand mit einer Schöpfzunge 42 begrenzt, wobei in den Außenluft-Kanal AL weiterhin ein Leitblech 43 hineinragt, derart daß die Außenluft die Innenwand mit der Schöpfzunge 42 umströmen muß, wodurch ein Teil der Luftströmung an der Schöpfzunge 42 abgefangen und wieder nach außen geleitet wird. Durch diese Maßnahme wird durch den derart abgeleiteten Luftanteil aufgrund seiner höheren Zentrifugalkraft erreicht, daß Wasserund Staubteilchen durch Wegschleudern am Eintritt in das weitere Belüftungssystem gehindert sind.

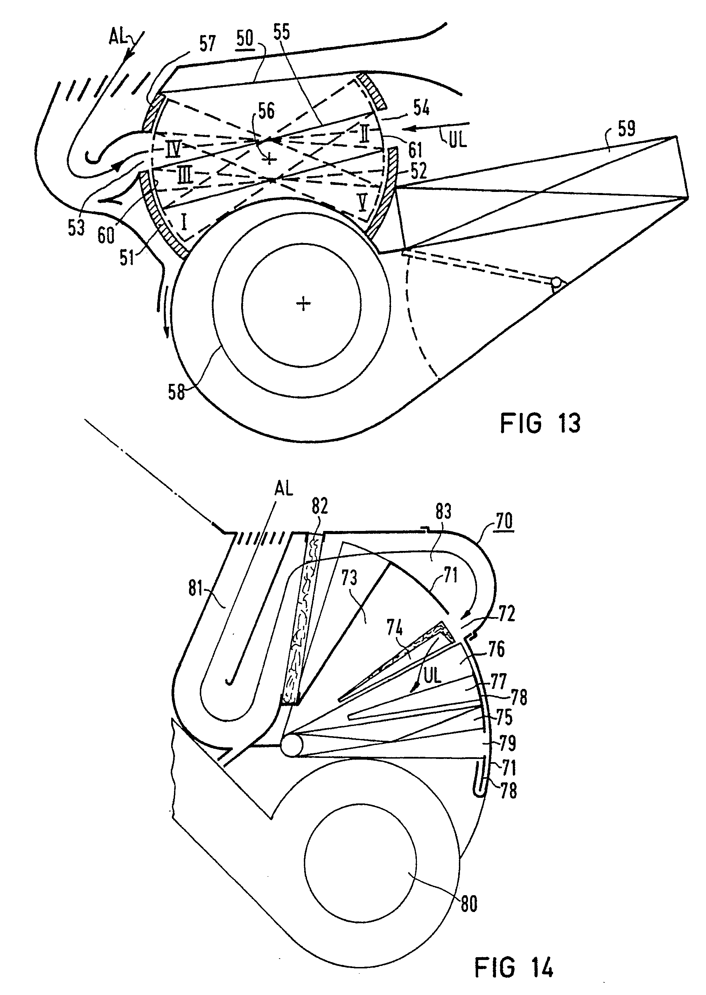

Bei einem weiteren erfindungsgemäßen Ausführungsbeispiel gemäß FIG 13 enthält der Zuluft-Kanal einen Hohlzylinder 50 mit in gegenüberliegenden Mantelflächen 51 bzw. 52 jeweils angeordneter erster bzw. zweiter Einlaßöffnung 53 bzw. 54 des Außenluft-Kanals AL bzw. des Umluft-Kanals UL; das Filter ist als Scheibenfilter 55 innerhalb des Hohlzylinders 50 derart eingepaßt ausgebildet und um die Zylinderachse 56 des Hohlzylinders schwenkbar gelagert, daß es zwischen einer ersten Endstellung I nur innerhalb des Luftstroms der Außenluft und geöffneter Einlaßöffnung 54 für die Umluft und einer zweiten Endstellung V nur innerhalb des Luftstroms der Umluft und geöffneter Einlaßöffnung 53 für die Außenluft in Zwischenstellungen II bis IV mit teilweisem bzw. vollständigem Verschluß der ersten bzw. zweiten Einlaßöffnung 53 bzw. 54 durch seine den Mantelflächen 51 bzw. 52 jeweils zugewandten schmalen Stirnflächen 60 bzw. 61 bringbar ist.

FIG 13 zeigt in ausgezogener Linienkontur die Zwischenstellung II des Scheibenfilters 55, bei der die zweite Einlaßöffnung 54 des Umluft-Kanals UL durch die Stirnfläche 61 verschlossen und die zweite Einlaßöffnung 53 des Außenluft-Kanals AL aufgrund seiner Anordnung relativ zur zweiten Einlaßöffnung 61 dadurch geöffnet ist, daß die der Stirnfläche 61 gegenüberliegende Stirnfläche 60 des Scheibenfilters 55 unterhalb der ersten Einlaßöffnung 53 liegt. Durch die zuvor gekennzeichnete Lage des Scheibenfilters 55 einerseits und der ersten bzw. zweiten Einlaßöffnung 53 bzw. 54 andererseits wird die vom Ventilator 58 geförderte Außenluft durch den Scheibenfilter 55 gedrückt und somit gefiltert dem Innenraum des Fahrzeuges über einen Kühler 59 zugeführt.

In der mit gestrichelter Kontur dargestellten ersten Endstellung I liegen die rechte schmale Stirnfläche 54 des Scheibenfilters 55 oberhalb der zweiten Einlaßöffnung 61 und die gegenüberliegende schmale Stirnfläche 60 des Scheibenfilters 55 unterhalb der ersten Einlaßöffnung 53, derart daß einerseits die gefilterte Außenluft und andererseits ungefilterte Umluft durch den Ventilator 58 über den Kühler 59 in den Innenraum des Kraftfahrzeuges geleitet werden. In der zweiten Endstellung V liegt die eine schmale Stirnfläche 61 des Scheibenfilters 55 unterhalb der zweiten Einlaßöffnung 54 und die gegenüberliegende andere schmale Stirnfläche 60 oberhalb der ersten Einlaßöffnung 53, derart daß ungefilterte Außenluft einerseits und gefilterte Umluft andererseits durch den Ventilator 58 über den Kühler 59 in den Innenraum des Kraftfahrzeuges gefördert werden.

Die Zwischenstellung III kennzeichnet eine Schwenklage des Scheibenfilters 55, bei der sowohl Außenluft als auch Umluft gefiltert angesaugt werden; in der Zwischenstellung IV ist die erste Einlaßöffnung 53 voll verschlossen, während die zweite Einlaßöffnung 54 voll geöffnet ist, derart daß nur gefilterte Umluft zum Innenraum des Kraftfahrzeuges gefördert wird. Bei der Verstellung des Scheibenfilters 55 von der Zwischenstellung III in die Zwischenstellung IV nimmt der Anteil an gefilterter Umluft stetig zu, während der Anteil an gefilterter Außenluft stetig abnimmt.

Zum einfachen Filterwechsel ist die Mantelfläche des Hohlzylinders 50 mit einer durch ein abnehmbares Wandteil 57 verschließbaren Service-Öffnung oberhalb der ersten Einlaßöffnung 53 versehen.

FIG 14 zeigt schließlich ein letztes Ausführungsbeispiel eines erfindungsgemäßen Filtersystems, bei dem der Zuluft-Kanal ZL einen Hohlzylinder-Sektor 70 mit in seiner Mantelfläche 71 angeordneter erster Einlaßöffnung 72 und in zumindest einer Stirnfläche 73 radial vor der ersten Einlaßöffnung 72 angeordneter zweiter Einlaßöffnung 74 des Außenluft-Kanals AL bzw. des Umluft-Kanals UL enthält; das Filter ist als Scheibensektorfilter 75 mit einem in Verstellmitnahme stehenden mantelflächenseitigen Verschlußschieber 78 mit einer Öffnung für die erste Einlaßöffnung und einem stirnflächenseitigen Verschlußschieber 76 für die zweite Einlaßöffnung 74 innerhalb des Hohlzylinder-Sektors 70 derart ausgebildet und um dessen Zylinderachse schwenkbar angeordnet, daß es zwischen einer ersten Endstellung außerhalb der Luftströme von Außenluft und Umluft und bei verschlossener erster Einlaßöffnung 72 und einer zweiten, in FIG 14 dargestellten Endstellung, innerhalb der Luftströme von Außenluft und Umluft in Zwischenstellungen mit vollem bzw. teilweisem Verschluß der ersten bzw. zweiten Einlaßöffnung 72 bzw. 74 durch den mantelflächenseitigen bzw. den stirnflächenseitigen Verschlußschieber 78 bzw. 76 bringbar ist.

Die durch den Außenluftkanal AL eintretende Außenluft wird über eine Tropfabscheidekammer 81 und ein Vorfilter 82 in eine Vorkammer vor der ersten Einlaßöffnung 72 des Hohlzylinder-Sektors 70 befördert. Die zweite stirnflächenseitige Einlaßöffnung ist keilförmig ausgebildet; die in radialer Verlängerung dieser zweiten Einlaßöffnung 74 vorgesehene erste, mantelflächenseitige Einlaßöffnung 72 ist ebenfalls schlitzartig ausgebildet. Ein das schwenkbare Scheibenfilter 75 aufnehmender Rahmen ist mit einem mantelflächenseitigen Verschlußschieber 78 für die erste Einlaßöffnung 72 und einem stirnflächenseitigen Verschlußschieber 76 für die zweite Einlaßöffnung 74 versehen, derart daß mit dem Verschwenken des Scheibensektorfilters 75 um die Drehachse des Hohlzylinder-Sektors 70 gleichzeitig die Verschlußschieber 76 bzw. 78 in die erste und zweite Endstellung sowie in die Zwischenstellungen verstellbar sind.

In der dargestellten zweiten Endstellung das Scheibensektorfilters 75 strömt jeweils von einem Gebläse 80 gefördert sowohl aus dem Umluft-Kanal UL angesaugte Umluft als auch aus dem Außenluft-Kanal AL angesaugte Außenluft über den Scheibensektorfilter 75 und somit gefiltert in den Innenraum des Kraftfahrzeuges. Wenn der Scheibensektorfilter 75 aus der in FIG 14 dargestellten untersten Endstellung nach oben verschwenkt wird, ergibt sich zunächst durch die Wirkung des stirnflächenseitigen Verschlußschiebers 76 ein abnehmender Umluftanteil; wenn der mantelflächenseitige Verschlußschieber 78 in den Bereich der ersten Einlaßöffnung 72 kommt, nimmt entsprechend der Außenluftanteil ab, während der Umluftanteil zunimmt, da eine Durchlaßöffnung 77 im stirnflächenseitigen Verschlußschieber 76 allmählich zur Deckung mit der zweiten Einlaßöffnung 74 des Umluft-Kanals UL kommt. Beide Luftströme werden weiterhin voll gefiltert. Nach Schließen der ersten Einlaßöffnung 72 durch den mantelflächenseitigen Verschlußschieber 78 strömt nur noch Umluft durch die zweite Einlaßöffnung 74 und die Durchlaßöffnung 77 im stirnflächenseitigen Verschlußschieber 76.

Bei weiterer Verschwenkung des Scheibensektorfilters 75 sind sowohl die erste als auch die zweite Einlaßöffnung 72 bzw. 74 verschlossen; bei noch weiterer Verstellung des Scheibensektorfilters 75 gelangt dann zunächst sowohl Außenluft als auch Umluft in zunehmender Menge ungefiltert über das Gebläse 80 in den Innenraum des Kraftfahrzeuges; anschließend wird der Außenluftanteil reduziert, bis in der ersten Endstellung des Scheibensektorfilters 75 ausschließlich Umluft ungefiltert über das Gebläse 80 in den Innenraum des Kraftfahrzeuges gelangt.

Ähnlich wie im Fall des Belüftungssystems gemäß FIG 12 wird die Außenluft über eine Tropfenabscheidekammer 81 und ein Vorfilter 82 sowie eine Vorkammer 83 in den Hohlzylinder-Sektor 70 mit dem darin schwenkbar eingepaßten Scheibensektorfilter 75 gefördert.

Zusammenfassend dürfte ersichtlich sein, daß die erfindungsgemäßen Konstruktionen eines Belüftungssystems bei kompakter und einfacher Bauweise einen erhöhten Lüftungskomfort mit Einstellmöglichkeit unterschiedlicher Anteile von Umluft und Außenluft sowohl gefiltert als auch ungefiltert gewährleisten kann.

**Ansprüche**

1. Belüftungssystem für ein Kraftfahrzeug mit einem Außenluft-Kanal (AL), einem Umluft-Kanal (UL), einem beweglichen Verschlußmittel am Eingang eines Zuluft-Kanals (ZL), insbesondere zu einem Ventilator, durch das der Anteil von Außenluft bzw. Umluft zu dem Zuluft-Kanal (ZL) einstellbar ist, und einem Filter zur Reinigung zumindest der Außenluft, **dadurch gekennzeichnet,** daß der Zuluft-Kanal (ZL) einen Filterstutzen (6) mit einem eingangsseitigen ersten Ausgangsstutzen (2) des Außenluft-Kanals (AL) und einem eingangsseitigen zweiten Ansaugstutzen (4) des Umluftkanals (UL) enthält und das Filter als Scheibenfilter (12) zusammen mit einer ersten Verschlußkappe (10) am Eingang des Filterstutzens (6) bei zueinander unabhängiger Verstellmöglichkeit um eine Drehachse (13) derart ausgebildet und schwenkbar angeordnet ist, daß es zwischen einer ersten Endstellung außerhalb der Luftströme von Außenluft und Umluft weggeschwenkt vom Ansaugstutzen (4) und abgedeckt durch die erste Verschlußklappe (10) und einer zweiten Endstellung innerhalb der Luftströme von Außenluft und Umluft geshwenkt vor den Ansaugstutzen (6) und unabgedeckt von der ersten Verschlußklappe (10) in Zwischenstellungen bei vollem bzw. teilweisem Verschluß des ersten bzw. zweiten Ansaugstutzens (2 bzw. 4) bringbar ist (FIG 1 - 6).

2. Belüftungssystem nach Anspruch 1, **dadurch gekennzeichnet,** daß der zweite Ansaugstutzen (4) des Umluft-Kanals (UL) mit einer zusätzlichen Verschlußklappe (11) versehen ist.

3. Belüftungssystem für ein Kraftfahrzeug mit einem AußenluftKanal (AL), einem Umluft-Kanal (UL), einem beweglichen Verschlußmittel am Eingang eines Zuluft-Kanals (ZL), insbesondere zu einem Ventilator, durch das der Anteil von Außenluft bzw. Umluft zu dem Zuluft-Kanal (ZL) einstellbar ist, und einem Filter zur Reinigung zumindest der Außenluft, **dadurch gekennzeichnet,** daß der Zuluft-Kanal (ZL) einen Hohlzylinder-Sektor (20) mit in seiner Mantelfläche (21) in Umfangsrichtung hintereinander angeordneter erster und zweiter Einlaßöffnung (28 bzw. 29) des Außenluft-Kanals (AL) bzw. des Umluft-Kanals (UL) enthält und das Filter als Scheibensektorfilter (25) innerhalb des Hohlzylinder-Sektors (20) derart ausgebildet und um dessen Zylinderachse (22) schwenkbar gelagert ist, daß es zwischen einer ersten Endstellung (I) außerhalb und einer zweiten Endstellung (IV) innerhalb der Luftströme von Außenluft und Umluft bei jeweils geöffneter erster und zweiter Einlaßöffnung (28 bzw. 29) in Zwischenstellungen (II; III) mit teilweisem bzw. vollständigem Verschluß der ersten bzw. zweiten Einlaßöffnung (28 bzw. 29) durch seine der Mantelfläche (21) zugewandte schmale Stirnfläche (26) bringbar ist (FIG 7).

4. Belüftungssystem für ein Kraftfahrzeug mit einem AußenluftKanal (AL), einem Umluft-Kanal (UL), einem beweglichen Verschlußmittel am Eingang eines Zuluft-Kanals (ZL), insbesondere zu einem Ventilator, durch das der Anteil von Außenluft bzw. Umluft zu dem Zuluft-Kanal (ZL) einstellbar ist, und einem Filter zur Reinigung zumindest der Außenluft, **dadurch gekennzeichnet,** daß der Zuluft-Kanal (ZL) einen Hohlzylinder-Sektor (31) mit in seiner Mantelfläche (32) angeordneter erster Einlaßöffnung (33) und in zumindest einer Stirnfläche (35) angeordneter zweiter Einlaßöffnung (34) des Außenluft-Kanals (AL) bzw. des Umluft-Kanals (UL) enthält und das Filter als Scheibensektorfilter (27) mit einem in Verstellmitnahme stehenden Verschlußschieber (36) für die zweite Einlaßöffnung (34) innerhalb des Hohlzylinder-Sektors (31) derart ausgebildet und um dessen Zylinderachse (22) schwenkbar gelagert ist, daß es zwischen einer ersten Endstellung (I) außerhalb des Luftstroms der Außenluft und bei verschlossener zweiter Einlaßöffnung (34) und einer zweiten Endstellung (IV) innerhalb der Luftströme der Außenluft und der Umluft in Zwischenstellungen (II; III) mit vollem bzw. teilweisem Verschluß der ersten bzw. zweiten Einlaßöffnung (33 bzw. 34) durch seine der Mantelfläche (32) zugewandte schmale Stirnfläche bzw. durch den Verschlußschieber (36) bringbar ist (FIG 8 - 11).

5. Belüftungssystem für ein Kraftfahrzeug mit einem AußenluftKanal (AL), einem Umluft-Kanal (UL), einem beweglichen Verschlußmittel am Eingang eines Zuluft-Kanals (ZL), insbesondere zu einem Ventilator, durch das der Anteil von Außenluft bzw. Umluft zu dem Zuluft-Kanal (ZL) einstellbar ist, und einem Filter zur Reinigung zumindest der Außenluft, **dadurch gekennzeichnet,** daß der Zuluftkanal (ZL) einen Hohlzylinder (50) mit in gegenüberliegenden Mantelflächen (51 bzw. 52) jeweils angeordneter erster bzw. zweiter Einlaßöffnung (53 bzw. 54) des Außenluft-Kanals (AL) bzw. des Umluft-Kanals (UL) enthält und das Filter als Scheibenfilter (55) innerhalb des Hohlzylinders (50) derart ausgebildet und um dessen Zylinderachse (56) schwenkbar gelagert ist, daß es zwischen einer ersten Endstellung (I) nur innerhalb des Luftstroms der Außenluft und geöffneter Einlaßöffnung (54) für die Umluft und einer zweiten Endstellung (V) nur innerhalb des Luftstroms der Umluft und geöffneter Einlaßöffnung (53) für die Außenluft in Zwischenstellungen (II - IV) mit teilweisem bzw. vollständigem Verschluß der ersten bzw. zweiten Einlaßöffnung (53 bzw. 54) durch seine den Mantelflächen (51 bzw. 52) jeweils zugewandten schmalen Stirnflächen (60 bzw. 61) bringbar ist (FIG 13).

6. Belüftungssystem für ein Kraftfahrzeug mit einem AußenluftKanal (AL), einem Umluft-Kanal (UL), einem beweglichen Verschlußmittel am Eingang eines Zuluft-Kanals (ZL), insbesondere zu einem Ventilator, durch das der Anteil von Außenluft bzw. Umluft zu dem Zuluft-Kanal (ZL) einstellbar ist, und einem Filter zur Reinigung zumindest der Außenluft, **dadurch gekennzeichnet,** daß der Zuluft-Kanal (ZL) einen Hohlzylinder-Sektor (70) mit in seiner Mantelfläche (71) angeordneter erster Einlaßöffnung (72) und in zumindest einer Stirnfläche (73) radial vor der ersten Einlaßöffnung (72) angeordneter zweiter Einlaßöffnung (74) des Außenluftkanals (AL) bzw. des Umluftkanals (UL) enthält und das Filter als Scheibensektorfilter (75) mit einem in Verstellmitnahme stehenden mantelflächenseitigen Verschlußschieber (78) für die erste Einlaßöffnung (72) und einem stirnflächenseitigen Verschlußschieber (76) für die zweite Einlaßöffnung (74) innerhalb des Hohlzylinder-Sektors (70) derart ausgebildet und um dessen Zylinderachse schwenkbar angeordnet ist, daß es zwischen einer ersten Endstellung außerhalb der Luftströme von Außenluft und Umluft und verschlossener erster Einlaßöffnung (72) und einer zweiten Endstellung innerhalb der Luftströme von Außenluft und Umluft in Zwischenstellungen mit vollem bzw. teilweisem Verschluß der ersten bzw. zweiten Einlaßöffnung (72 bzw. 74) durch den mantelflächenseitigen bzw. den stirnflächigen Verschlußschieber (78 bwz. 76) bringbar ist (FIG 14).

Claims

1. Ventilation system for a motor vehicle having an external air duct (AL), a recirculated air duct (UL), moveable shutting means at the input of an inlet air duct (ZL), more particularly to a ventilator, by means of which the portion of external air or recirculated air to the inlet air duct (ZL) can be adjusted, and a filter for cleaning at least the external air, characterized in that the inlet air duct (ZL) contains a filter connecting piece (6) with a first output connecting piece (2) of the external air duct (AL) on the input side and a second suction connecting piece (4) of the recirculated air duct (UL) on the input side, and the filter is constructed as a disk filter (12) together with a first shutter (10) at the input of the filter connecting piece (6) with adjustability independent of one another around an axis of rotation (13) and is rotatably arranged in such a way that it can be brought into intermediate positions with complete or partial shutting of the first or second suction connecting piece (2 or 4), between a first end position outside the air currents of external air and recirculated air, with it being swung out of the way of the suction connecting piece (4) and covered by the first shutter (10) and a second end position within the air currents of external air and recirculated air with it being rotated in front of the suction connecting pieces (6) and not covered by the first shutter (10) (Figures 1 - 6).

2. Ventilation system according to claim 1, characterized in that the second suction connecting piece (4) of the recirculated air duct (UL) is provided with an additional shutter (11).

3. Ventilation system for a motor vehicle having an external air duct (AL), a recirculated air duct (UL), moveable shutting means at the input of an inlet air duct (ZL), more particularly to a ventilator, by means of which the portion of external air or recirculated air to the inlet air duct (ZL) can be adjusted, and a filter for cleaning at least the external air, characterized in that the inlet air duct (ZL) contains a hollow cylinder sector (20) with first and second inlet opening (28 or 29) of the external air duct (AL) or of the recirculated air duct (UL) arranged in the circumferential direction behind one another in its casing surface (21), and the filter is constructed as a disk sector filter (25) within the hollow cylinder sector (20) and is rotatably mounted around its cylinder axis (22) in such a way that it can be brought into intermediate positions (II; III) with partial or complete shutting of the first or second inlet opening (28 or 29), between a first end position (I) outside and a second end position (IV) inside the air currents of external air and recirculated air with, in each case, opened first and second inlet opening (28 or 29), by means of its narrow front surface (26) directed to the casing surface (21) (Figure 7).

4. Ventilation system for a motor vehicle having an external air duct (AL), a recirculated air duct (UL), moveable shutting means at the input of an inlet air duct (ZL), more particularly to a ventilator, by means of which the portion of external air or recirculated air to the inlet air duct (ZL) can be adjusted, and a filter for cleaning at least the external air, characterized in that the inlet air duct (ZL) contains a hollow cylinder sector (31) with first inlet opening (33) arranged in its casing surface (32) and second inlet opening (34) of the external air duct (AL) or of the recirculated air duct (UL) arranged in at least one front surface (35), and the filter is constructed as a disk sector filter (27) with a shutting slider (36) in adjustment synchronization for the second inlet opening (34) within the hollow cylinder sector (31) and is rotatably mounted around its cylinder axis (22) in such a way that it can be brought into intermediate positions (II; III) with complete or partial shutting of the first or second inlet opening (33 or 34), between a first end position (I) outside the air current of the external air and with shut second inlet opening (34) and a second end position (IV) within the air currents of the external air and the recirculated air, by means of its narrow front surface directed to the casing surface (32) or by means of the shutting slider (36) (Figures 8 - 11).

5. Ventilation system for a motor vehicle having an external air duct (AL), a recirculated air duct (UL) moveable shutting means at the input of an inlet air duct (ZL), more particularly to a ventilator, by means of which the portion of external air or recirculated air to the inlet air duct (ZL) can be adjusted, and a filter for cleaning at least the external air, characterized in that the inlet air duct (ZL) contains a hollow cylinder (50) with first or second inlet opening (53 or 54) of the external air duct (AL) or of the recirculated air duct (UL) respectively arranged in opposite casing surfaces (51 or 52), and the filter is constructed as a disk filter (55) within the hollow cylinder (50) and is rotatably mounted around its cylinder axis (56) in such a way that it can be brought into intermediate positions (II - IV) with partial or complete shutting of the first or second inlet opening (53 or 54), between a first end position (I) only within the air current of the external air and opened inlet opening (54) for the recirculated air and a second end position (V) only within the air current of the recirculated air and opened inlet opening (53) for the external air, by means of its narrow front surfaces (60 or 61) in each case directed to the casing surfaces (51 or 52) (Figure 13).

6. Ventilation system for a motor vehicle having an external air duct (AL), a recirculated air duct (UL), moveable shutting means at the input of an inlet air duct (ZL), more particularly to a ventilator, by means of which the portion of external air or recirculated air to the inlet air duct (ZL) can be adjusted, and a filter for cleaning at least the external air, characterized in that the inlet air duct (ZL) contains a hollow cylinder sector (70) with first inlet opening (72) arranged in its casing surface (71) and second inlet opening (74) of the external air duct (AL) or recirculated air duct (UL) arranged in at least one front surface (73) radially in front of the first inlet opening (72), and the filter is constructed as a disk sector filter (75) with a shutting slider (78) in adjustment synchronization on the casing surface side for the first inlet opening (72) and a shutting slider (76) on the front surface side for the second inlet opening (74) within the hollow cylinder sector (70), and is rotatably arranged around its cylinder axis in such a way that it can be brought into intermediate positions with complete or partial shutting of the first or second inlet opening (72 or 74), between a first end position outside the air currents of external air and recirculated air and shut first inlet opening (72) and a second end position within the air currents of external air and recirculated air, by means of the shutting slider (78 or 76) on the casing surface side or the front surface side (Figure 14).

**Revendications**

1. Système de ventilation pour un véhicule automobile comprenant un conduit pour l'air extérieur (AL), un conduit pour l'air ambiant (UL), un moyen de fermeture mobile à l'entrée d'un canal d'arrivée de l'air (ZL), notamment vers un ventilateur par lequel la proportion d'air extérieur et d'air ambiant qui est envoyée au canal d'arrivée d'air (ZL) peut être réglée, ainsi qu'un filtre pour épurer au moins l'air extérieur, caractérisé en ce que le conduit d'arrivée d'air (ZL) comporte un embout de filtre (6) avec, du côté de l'entrée, un premier embout de sortie (2) du conduit pour l'air extérieur (AL) et, du côté de l'entrée, un second embout d'aspiration (4) du conduit pour l'air ambiant (UL) et le filtre, sous la forme d'un filtre à disque (12) et ensemble avec un premier volet de fermeture (10), est constitué et monté basculant autour d'un axe de basculement (13) à l'entrée de l'embout de filtre (6), avec possibilité de déplacement indépendamment l'un de l'autre, de façon à pouvoir être mis entre une première position d'extrémité à l'extérieur des courants d'air extérieur et d'air ambiant où il est éloigné de l'embout d'aspiration (4) et recouvert par le premier volet de fermeture (10) et une seconde position d'extrémité dans les courants d'air extérieur et d'air ambiant, alors qu'il est basculé devant l'embout d'aspiration (6) et qu'il n'est pas recouvert par le premier volet de fermeture (10), dans des positions intermédiaires, lorsque le premier et le second embouts d'aspiration (2 et 4) sont entièrement ou partiellement fermés. (figures 1 à 6)

2. Système de ventilation suivant la revendication 1, caractérisé en ce que le second embout d'aspiration (4) du conduit pour l'air ambiant (UL) est muni d'un volet supplémentaire de fermeture (11).

3. Système de ventilation pour un véhicule automobile comprenant un conduit pour l'air extérieur (AL), un conduit pour l'air ambiant (UL), un moyen de fermeture mobile à l'entrée d'un canal d'arrivée de l'air (ZL), notamment vers un ventilateur par lequel la proportion d'air extérieur et d'air ambiant qui est envoyée au canal d'arrivée d'air (ZL) peut être réglée et un filtre pour épurer au moins l'air extérieur, caractérisé en ce que le conduit d'arrivée d'air (ZL) comporte un secteur en forme de cylindre creux (20) ayant des première et seconde ouvertures d'entrée (28 et 29) du conduit pour l'air extérieur (AL) et du conduit pour l'air ambiant (UL), ménagée dans sa surface latérale (21) l'une derrière l'autre dans la direction périphérique, et le filtre est constitué sous la forme d'un filtre à secteur de disque (25) dans le secteur en forme de cylindre creux (20) et est monté basculant autour de l'axe (22) du cylindre, de façon à pouvoir être placé entre une première position d'extrémité (I) à l'extérieur des courants d'air extérieur et d'air ambiant et une seconde position d'extrémité (IV) dans les courants d'air extérieur et d'air ambiant, alors que les première et seconde ouvertures d'entrée (28 et 29) sont ouvertes, dans des positions intermédiaires (II, III), avec fermeture partielle ou totale de la première et de la seconde ouverture d'entrée (28 et 29) par sa surface frontale (26) étroite tournée vers sa surface latérale (21),(figure 7).

4. Système de ventilation pour un véhicule automobile comprenant un conduit pour l'air extérieur (AL), un conduit pour l'air ambiant (UL), un moyen de fermeture mobile à l'entrée d'un canal d'arrivée de l'air (ZL), notamment vers un ventilateur, par lequel la proportion d'air extérieur et d'air ambiant envoyée au canal d'arrivée d'air (ZL) peut être réglée ainsi qu'un filtre pour épurer au moins l'air extérieur, caractérisé en ce que le conduit d'arrivée d'air (ZL) comporte un secteur en forme de cylindre creux (31) ayant, ménagée dans sa surface latérale (32), une première ouverture d'entrée (33) et, ménagée dans au moins une surface frontale (35), une seconde ouverture d'entrée (34) du conduit pour l'air extérieur (AL) et du conduit pour l'air ambiant (UL) et le filtre est constitué sous la forme d'un filtre à secteur de disque (27), ayant un tiroir de fermeture de la seconde ouverture d'entrée (34) déplacé par entraînement dans le secteur en forme de cylindre creux (31), et est monté basculant autour de l'axe (22) du cylindre, de façon à pouvoir être mis, entre une première position d'extrémité (I) à l'extérieur du courant de l'air extérieur, alors que la seconde ouverture d'entrée (34) est fermée, et une seconde position d'extrémité (IV) dans les courants d'air extérieur et d'air ambiant, dans des positions intermédiaires (II, III), avec fermeture complète ou partielle de la première et de la seconde ouverture d'entrée (33 et 34), par sa surface frontale étroite tournée vers la surface latérale ou par le tiroir de fermeture (36) (figures 8 à 11).

5. Système de ventilation pour un véhicule automobile comprenant un conduit pour l'air extérieur (AL), un conduit pour l'air ambiant (UL), un moyen de fermeture mobile à l'entrée d'un canal d'arrivée de l'air (ZL), notamment vers un ventilateur par lequel la proportion d'air extérieur et d'air ambiant qui est envoyée au canal d'arrivée d'air (ZL) peut être réglée, ainsi qu'un filtre pour épurer au moins l'air extérieur, caractérisé en ce que le conduit d'arrivée d'air (ZL) comporte un cylindre creux (50) ayant des première et seconde ouvertures d'entrée (53 et 54) du conduit pour l'air extérieur (AL) et du conduit pour l'air ambiant (UL) ménagées dans des surfaces latérales (51 et 52) opposées, et le filtre est constitué sous la forme d'un filtre à disque (55) dans le cylindre creux (50) et est monté basculant autour de l'axe (56) de ce cylindre, de manière à pouvoir être mis, entre une première position d'extrémité (I) seulement dans le courant de l'air extérieur, alors que l'ouverture d'entrée (54) de l'air ambiant est ouverte, et une seconde position d'extrémité (V) seulement dans le courant d'air ambiant, alors que l'ouverture d'entrée (53) de l'air extérieur est ouverte, dans des positions intermédiaires (II à IV) avec fermeture partielle ou totale de la première et de la seconde ouverture d'entrée (53 et 54) par ses surfaces frontales (60 et 61) étroites tournées vers la surface latérale (51 et 52),( figure 13 ).

6. Système de ventilation pour un véhicule automobile comprenant un conduit pour l'air extérieur (AL), un conduit pour l'air ambiant (UL), un moyen de fermeture mobile à l'entrée d'un canal d'arrivée de l'air (ZL), notamment vers un ventilateur par lequel la proportion d'air extérieur et d'air ambiant qui est envoyée au canal d'arrivée d'air (ZL) peut être réglée ainsi qu'un filtre pour épurer au moins l'air extérieur, caractérisé en ce que le conduit d'arrivée d'air (ZL) comporte un secteur en forme de cylindre creux (70) ayant, ménagée dans sa surface latérale (71), une première ouverture d'entrée (72) du conduit pour l'air extérieur (AL) et du conduit pour l'air ambiant (UL) et, ménagée dans au moins une surface frontale (73) radialement devant la première ouverture d'entrée (72), une seconde ouverture d'entrée (74) du conduit pour l'air extérieur (AL) et du conduit pour l'air ambiant (UL), et le filtre est constitué, dans le secteur en forme de cylindre creux (70) sous la forme d'un filtre à secteur de disque (75) ayant un tiroir de fermeture (78) de la première ouverture d'entrée (72), se trouvant du côté de la surface latérale et déplacé par entraînement, et un tiroir de fermeture (76) de la seconde ouverture d'entrée (74), se trouvant du côté de la surface frontale, et est monté basculant autour de l'axe de ce cylindre, de manière à pouvoir être mis, entre une première position d'extrémité à l'extérieur des courants d'air extérieur et d'air ambiant, alors que la première ouverture d'entrée (72) est fermée et une seconde position d'extrémité dans les courants d'air extérieur et d'air ambiant, dans des positions intermédiaires, avec fermeture complète ou partielle des première et seconde ouvertures d'entrée (72 et 74) par les tiroirs de fermeture (78 et 76) se trouvant du côté de la surface frontale et du côté de la surface latérale, (figure 14).

FIG 1

FIG 2

FIG 3

FIG 4

FIG 5

FIG 6

FIG 7

FIG 8

FIG 9

FIG 10

FIG 11

FIG 12

FIG 13

FIG 14